# EUROPÄISCHE PATENTSCHRIFT

(11) **EP 2 585 508 B1**
(45) Veröffentlichungstag und Bekanntmachung des Hinweises auf die Patenterteilung: **16.07.2014**
(21) Anmeldenummer: 11727695.6
(22) Anmeldetag: 27.06.2011
(51) Int. Cl.: C08G 18/32

(54) **VERFAHREN ZUR HERSTELLUNG VON PORÖSEN MATERIALIEN AUF BASIS VON POLYHARNSTOFF**
METHOD FOR PRODUCING POROUS POLYUREA-BASED MATERIALS
PROCÉDÉ DE FABRICATION DE MATÉRIAUX POREUX À BASE DE POLYCARBAMIDE

(30) Priorität: 28.06.2010 EP 10167454
(43) Veröffentlichungstag der Anmeldung: 01.05.2013
(73) Patentinhaber: BASF SE, 67056 Ludwigshafen (DE)
(72) Erfinder: FRICKE, Marc, 49090 Osnabrück (DE); ELBING, Mark, 28215 Bremen (DE)
(86) Internationale Anmeldenummer: PCT/EP2011/060674
(87) Internationale Veröffentlichungsnummer: WO 2012/000917

(56) Entgegenhaltungen:
- WO-A1-2008/138978
- GB-A- 1 412 818

## Beschreibung

Die vorliegende Erfindung betrifft ein Verfahren zur Herstellung von porösen Materialien umfassend die Umsetzung mindestens eines mehrfunktionellen Isocyanates mit einer Aminkomponente, welche mindestens ein mehrfunktionelles substituiertes aromatisches Amin umfasst, sowie Wasser in Gegenwart eines Lösungsmittels.

Weiterhin betrifft die Erfindung die so erhältlichen porösen Materialien sowie die Verwendung der porösen Materialien als Dämmstoff und in Vakuumisolationspaneelen.

Poröse Materialien, beispielsweise Polymerschäume, mit Poren im Größenbereich von wenigen Mikrometern oder deutlich darunter und einer hohen Porosität von mindestens 70 % sind aufgrund theoretischer Überlegungen besonders gute Wärmeisolatoren.

Solche porösen Materialien mit kleinem mittlerem Porendurchmesser können beispielsweise als organische Xerogele vorliegen. In der Literatur wird der Begriff Xerogel nicht durchweg einheitlich verwendet. Im Allgemeinen wird unter einem Xerogel ein poröses Material verstanden, welches durch ein Sol-Gel-Verfahren hergestellt wurde, wobei die flüssige Phase durch Trocknung unterhalb der kritischen Temperatur und unterhalb des kritischen Drucks der flüssigen Phase ("subkritische Bedingungen") aus dem Gel entfernt wurde. Im Gegensatz hierzu spricht man im Allgemeinen von Aerogelen, wenn die Entfernung der flüssigen Phase aus dem Gel unter überkritischen Bedingungen durchgeführt wurde.

Beim Sol-Gel-Verfahren wird zunächst ein Sol auf Basis einer reaktiven organischen Gelvorstufe hergestellt und danach das Sol durch eine vernetzende Reaktion zu einem Gel geliert. Um aus dem Gel ein poröses Material, beispielsweise ein Xerogel, zu erhalten, muss die Flüssigkeit entfernt werden. Dieser Schritt wird nachfolgend vereinfachend als Trocknung bezeichnet.

Die WO-95/02009 offenbart Isocyanat-basierte Xerogele, die insbesondere für Anwendungen im Bereich der Vakuumisolation geeignet sind. Die Publikationsschrift offenbart zudem ein Sol-Gel-basiertes Verfahren zur Herstellung der Xerogele, wobei bekannte, unter anderem aromatische Polyisocyanate sowie ein unreaktives Lösungsmittel zum Einsatz kommen. Als weitere Verbindungen mit aktiven H-Atomen werden aliphatische oder aromatische Polyamine oder Polyole eingesetzt. Die in der Publikationsschrift offenbarten Beispiele umfassen solche, in denen ein Polyisocyanat mit Diaminodiethyltoluol umgesetzt wird. Die offenbarten Xerogele weisen generell mittlere Porengrößen im Bereich von 50 µm auf. In einem Beispiel wird ein mittlerer Porendurchmesser von 10 µm genannt.

Aus der WO-2008/138978 sind Xerogele enthaltend von 30 bis 90 Gew.-% mindestens eines mehrfunktionellen Isocyanats und von 10 bis 70 Gew.-% mindestens eines mehrfunktionellen aromatischen Amins bekannt, deren volumengewichteter mittlerer Porendurchmesser höchstens 5 Mikrometer beträgt.

Die unveröffentlichte EP-A 09178783.8 beschreibt poröse Materialien auf Basis von mehrfunktionellen Isocyanaten und mehrfunktionellen aromatischen Aminen, wobei die Aminkomponente mehrfunktionelle substituierte aromatische Amine umfasst. Die Herstellung der genannten porösen Materialien erfolgt durch Umsetzung von Isocyanaten mit der gewünschten Menge Amin in einem Lösungsmittel, das gegenüber den Isocyanaten nicht reaktiv ist. Die Bildung der Harnstoff-Verknüpfungen erfolgt dabei ausschließlich durch Reaktion der Isocyanatgruppen mit den eingesetzten Aminogruppen.

Die Materialeigenschaften, insbesondere die mechanische Stabilität und/oder die Druckfestigkeit sowie die Wärmeleitfähigkeit, der bekannten porösen Materialien auf Basis von Polyharnstoff sind jedoch nicht für alle Anwendungen ausreichend. Zudem zeigen die zugrundeliegenden Formulierungen bei der Trocknung eine Schrumpfung unter Verringerung der Porosität und Erhöhung der Dichte. Darüber hinaus ist die Gelierungszeit, d. h. die zur Gelierung der Ausgangsverbindungen erforderliche Zeit, oft zu lang.

Ein besonderes Problem bei den aus dem Stand der Technik bekannten Formulierungen auf Basis von Isocyanaten und Aminen sind sogenannte Mischfehler. Mischfehler treten infolge der hohen Reaktionsgeschwindigkeit zwischen Isocyanaten und Aminogruppen auf, da vor einer vollständigen Durchmischung die Gelierungsreaktion bereits weit fortgeschritten ist. Mischfehler führen zu porösen Materialien mit heterogenen und unzureichenden Materialeigenschaften. Ein Konzept zur Verringerung des Phänomens der Mischfehler ist somit allgemein wünschenswert.

Es bestand daher die Aufgabe, die vorgenannten Nachteile zu vermeiden. Insbesondere sollte ein poröses Material zur Verfügung gestellt werden, das die vorgenannten Nachteile nicht oder in geringerem Maße aufweist. Die porösen Materialien sollten eine im Vergleich zum Stand der Technik verbesserte Wärmeleitfähigkeit im Vakuum aufweisen. Darüber hinaus sollten die porösen Materialien auch bei Drücken oberhalb des Vakuumbereiches, insbesondere in einem Druckbereich von ungefähr 1 mbar bis ungefähr 100 mbar eine geringe thermische Leitfähigkeit aufweisen. Dies ist wünschenswert, da in Vakuumpaneelen im Laufe der Zeit eine Druckzunahme erfolgt. Weiterhin sollte das poröse Material gleichzeitig eine hohe Porosität, eine geringe Dichte und eine ausreichend hohe mechanische Stabilität aufweisen.

Schließlich sollten Mischfehler und somit die Heterogenitäten in der Materialstruktur und den Materialeigenschaften in den porösen Materialien, welche bei der Umsetzung der Isocyanate mit den Aminen entstehen, vermieden werden.

Demgemäß wurde das erfindungsgemäße Verfahren und die so erhältlichen porösen Materialien gefunden.

Das erfindungsgemäße Verfahren zur Herstellung eines porösen Materials umfasst die Umsetzung der folgenden Komponenten (a1), (a2) und (a3):
(a1) mindestens ein mehrfunktionelles Isocyanat,
(a2) mindestens ein mehrfunktionelles substituiertes aromatisches Amin (a2-s) gemäß der allgemeinen Formel I 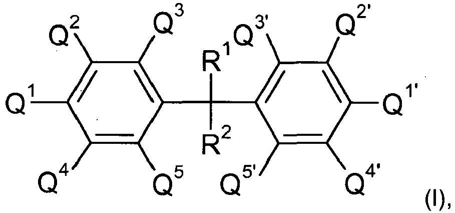 wobei R¹ und R² gleich oder unterschiedlich sein können und unabhängig voneinander ausgewählt werden aus Wasserstoff und linearen oder verzweigten Alkylgruppen mit von 1 bis 6 Kohlenstoffatomen und wobei sämtliche Substituenten Q¹ bis Q⁵ und 0¹' bis Q⁵' gleich oder unterschiedlich sind und unabhängig voneinander ausgewählt werden aus Wasserstoff, einer primären Aminogruppe und einer linearen oder verzweigten Alkylgruppe mit von 1 bis 12 Kohlenstoffatomen, wobei die Alkylgruppe weitere funktionelle Gruppen tragen kann, unter der Voraussetzung, dass
   - die Verbindung gemäß der allgemeinen Formel I mindestens zwei primäre Aminogruppen umfasst, wobei zumindest eines aus Q¹, Q³ und Q⁵ eine primäre Aminogruppe ist und zumindest eines aus Q^{1'}, Q^{3'} und Q^{5'} eine primäre Aminogruppe ist und
   - Q², Q⁴, Q^{2'} und Q^{4'} so gewählt werden, dass die Verbindung gemäß der allgemeinen Formel I mindestens eine lineare oder verzweigte Alkylgruppe, die weitere funktionelle Gruppen tragen kann, mit von 1 bis 12 Kohlenstoffatomen in α-Position zu mindestens einer an den aromatischen Kern gebundenen primären Aminogruppe aufweist, und optional mindestens ein weiteres mehrfunktionelles aromatisches Amin (a2-u), welches sich von den Aminen (a2-s) gemäß der allgemeinen Formel I unterscheidet, und
(a3) Wasser,
   in Gegenwart eines Lösungsmittels (C) und optional in Gegenwart mindestens eines Katalysators (a4) unter Bildung der erfindungsgemäßen porösen Materialien.

Bevorzugte Ausführungsformen sind den Ansprüchen und der Beschreibung zu entnehmen. Kombinationen bevorzugter Ausführungsformen verlassen den Rahmen dieser Erfindung nicht. Nachfolgend werden bevorzugte Ausführungsformen der eingesetzten Komponenten erläutert.

Die mehrfunktionellen Isocyanate (a1) werden im Folgenden gemeinsam als Komponente (a1) bezeichnet. Entsprechend werden die mehrfunktionellen Amine (a2) im Folgenden gemeinsam als Komponente (a2) bezeichnet. Es ist für den Fachmann offensichtlich, dass die genannten Monomerkomponenten im porösen Material in umgesetzter Form vorliegen.

Unter Funktionalität einer Verbindung soll im Rahmen der vorliegenden Erfindung die Zahl der reaktiven Gruppen pro Molekül verstanden werden. Im Fall der Monomerkomponente (a1) ist die Funktionalität die Anzahl der Isocyanatgruppen pro Molekül. Im Falle der Aminogruppen der Monomerkomponente (a2) bezeichnet die Funktionalität die Zahl der reaktiven Aminogruppen pro Molekül. Eine mehrfunktionelle Verbindung weist dabei eine Funktionalität von mindestens 2 auf.

Falls als Komponente (a1) beziehungsweise (a2) Mischungen aus Verbindungen mit unterschiedlicher Funktionalität zum Einsatz kommen, ergibt sich die Funktionalität der Komponenten jeweils aus dem zahlengewichteten Mittel der Funktionalität der einzelnen Verbindungen. Eine mehrfunktionelle Verbindung enthält mindestens zwei der oben genannten funktionellen Gruppen pro Molekül.

### Komponente (a1)

Im erfindungsgemäßen Verfahren wird als Komponente (a1) mindestens ein mehrfunktionelles Isocyanat umgesetzt.

Im Rahmen des erfindungsgemäßen Verfahrens beträgt die eingesetzte Menge der Komponente (a1) vorzugsweise von 40 bis 99,8 Gew.-%, insbesondere von 55 bis 99,3 Gew.-% beträgt, besonders bevorzugt von 68 bis 97,5 Gew.-%, jeweils bezogen auf das Gesamtgewicht der Komponenten (a1), (a2) und (a3), welches 100 Gew.-% ergibt.

Als mehrfunktionelle Isocyanate kommen aromatische, aliphatische, cycloaliphatische und/oder araliphatische Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente (a1) in diesem Fall verschiedene mehrfunktionelle Isocyanate enthält. Als Monomerbausteine (a1) in Betracht kommende mehrfunktionelle Isocyanate weisen zwei (im folgenden Diisocyanate genannt) oder mehr als zwei Isocyanatgruppen pro Molekül der Monomerkomponente auf.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3`-Dimethyldiphenyldüsocyanat, 1,2-Diphenylethandiisocyanat und/oder p-Phenylendiisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexandiisocyanat und 4,4'-, 2,4'- und/oder 2,2'-Dicyclohexylmethandiisocyanat.

Als mehrfunktionelle Isocyanate (a1) sind aromatische Isocyanate bevorzugt. Besonders bevorzugt sind als mehrfunktionelle Isocyanate der Komponente (a1) folgende Ausführungsformen:
i) Mehrfunktionelle Isocyanate auf Basis von Toluylendiisocyanat (TDI), insbesondere 2,4-TDI oder 2,6-TDI oder Mischungen aus 2,4- und 2,6-TDI;
ii) Mehrfunktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;
iii) Gemische aus mindestens einem aromatischen Isocyanat gemäß Ausführungsform i) und mindestens einem aromatischen Isocyanat gemäß Ausführungsform ii).

Als mehrfunktionelles Isocyanat besonders bevorzugt ist oligomeres Diphenylmethandiisocyanat. Bei oligomerem Diphenylmethandiisocyanat (im folgenden oligomeres MDI genannt) handelt es sich um ein oder ein Gemisch aus mehreren oligomeren Kondensationsprodukten und somit Derivaten von Diphenylmethandüsocyanat (MDI). Die mehrfunktionellen Isocyanate können bevorzugt auch aus Mischungen von monomeren aromatischen Diisocyanaten und oligomerem MDI aufgebaut sein.

Oligomeres MDI enthält ein oder mehrere mehrkernige Kondensationsprodukte des MDI mit einer Funktionalität von mehr als 2, insbesondere 3 oder 4 oder 5. Oligomeres MDI ist bekannt und wird häufig als Polyphenylpolymethylenisocyanat oder auch als polymeres MDI bezeichnet. Oligomeres MDI ist üblicherweise aus einer Mischung aus MDI-basierten Isocyanaten mit unterschiedlicher Funktionalität aufgebaut. Üblicherweise wird oligomeres MDI im Gemisch mit monomerem MDI eingesetzt.

Die (mittlere) Funktionalität eines Isocyanates, welches oligomeres MDI enthält, kann im Bereich von ungefähr 2,2 bis ungefähr 5 variieren, insbesondere von 2,4 bis 3,5, insbesondere von 2,5 bis 3. Eine solche Mischung von MDI-basierten mehrfunktionellen Isocyanaten mit unterschiedlichen Funktionalitäten ist insbesondere das Roh-MDI, das bei der Herstellung von MDI anfällt.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat® vertrieben.

Vorzugsweise beträgt die Funktionalität der Komponente (a1) mindestens zwei, insbesondere mindestens 2,2 und besonders bevorzugt mindestens 2,5. Die Funktionalität der Komponente (a1) beträgt bevorzugt von 2,2 bis 4 und besonders bevorzugt von 2,5 bis 3.

Vorzugsweise beträgt der Gehalt an Isocyanatgruppen der Komponente (a1) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

In einer bevorzugten Ausführungsform besteht die Komponente (a1) aus mindestens einem mehrfunktionellen Isocyanat ausgewählt aus Diphenylmethan-4,4'-diisocyanat, Diphenylmethan-2,4'-diisocyanat, Diphenylmethan-2,2'-diisocyanat und oligomerem Diphenylmethandiisocyanat. Im Rahmen dieser bevorzugten Ausführungsform enthält die Komponente (a1) besonders bevorzugt oligomeres Diphenylmethandiisocyanat und weist eine Funktionalität von mindestens 2,5 auf.

Die Viskosität der eingesetzten Komponente (a1) kann in einem weiten Bereich variieren. Vorzugsweise weist die Komponente (a1) eine Viskosität von 100 bis 3000 mPa.s, besonders bevorzugt von 200 bis 2500 mPa.s, auf.

### Komponente (a2)

Erfindungsgemäß wird im Rahmen von Komponente (a2) mindestens ein mehrfunktionelles substituiertes aromatisches Amin (a2-s) gemäß der allgemeinen Formel I 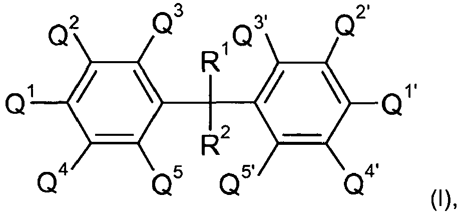 wobei R¹ und R² gleich oder unterschiedlich sein können und unabhängig voneinander ausgewählt werden aus Wasserstoff und linearen oder verzweigten Alkylgruppen mit 1 bis 6 Kohlenstoffatomen und wobei sämtliche Substituenten Q¹ bis Q⁵ und Q^{1'} bis Q^{5'} gleich oder unterschiedlich sind und unabhängig voneinander ausgewählt werden aus Wasserstoff, einer primären Aminogruppe und einer linearen oder verzweigten Alkylgruppe mit 1 bis 12 Kohlenstoffatomen, wobei die Alkylgruppe weitere funktionelle Gruppen tragen kann, unter der Voraussetzung, dass
- die Verbindung gemäß der allgemeinen Formel I mindestens zwei primäre Aminogruppen umfasst, wobei zumindest eines aus Q¹, Q³ und Q⁵ eine primäre Aminogruppe ist und zumindest eines aus Q^{1'}, Q^{3'} und Q^{5'} eine primäre Aminogruppe ist und
- Q², Q⁴, Q^{2'} und Q^{4'} so gewählt werden, dass die Verbindung gemäß der allgemeinen Formel I mindestens eine lineare oder verzweigte Alkylgruppe, die optional weitere funktionelle Gruppen tragen kann, mit von 1 bis 12 Kohlenstoffatomen in α-Position zu mindestens einer an den aromatischen Kern gebundenen primären Aminogruppe aufweist, und
optional mindestens ein weiteres mehrfunktionelles aromatisches Amin (a2-u), welches sich von den Aminen (a2-s) gemäß der allgemeinen Formel I unterscheidet, umgesetzt.

Komponente (a2) besteht somit aus mehrfunktionellen aromatischen Aminen, wobei die mehrfunktionellen aromatischen Amine (a2-s) gemäß der allgemeinen Formel I ein Bestandteil sind.

Unter mehrfunktionellen Aminen sind solche zu verstehen, welche mindestens zwei gegenüber Isocyanaten reaktive Aminogruppen pro Molekül aufweisen. Gegenüber Isocyanaten reaktiv sind dabei primäre und sekundäre Aminogruppen, wobei die Reaktivität der primären Aminogruppen im Allgemeinen deutlich höher ist als die der sekundären.

Vorzugsweise beträgt die eingesetzte Menge der Komponente (a2) von 0,1 bis 30 Gew.-%, insbesondere von 0,5 bis 20 Gew.-%, besonders bevorzugt von 2 bis 12 Gew.-%, jeweils bezogen auf das Gesamtgewicht der Komponenten (a1), (a2) und (a3), welches 100 Gew.-% ergibt.

Erfindungsgemäß sind R¹ und R² im Rahmen der allgemeinen Formel I gleich oder unterschiedlich und werden unabhängig voneinander ausgewählt aus Wasserstoff, einer primären Aminogruppe und einer linearen oder verzweigten Alkylgruppe mit von 1 bis 6 Kohlenstoffatomen. Vorzugsweise werden R¹ und R² ausgewählt aus Wasserstoff und Methyl. Besonders bevorzugt gilt R¹ = R² = H.

Vorzugsweise werden Q², Q⁴, Q²' und Q⁴' so gewählt, dass das substituierte aromatische Amin (a2-s) mindestens zwei primäre Aminogruppen umfasst, die jeweils eine oder zwei lineare oder verzweigte Alkylgruppen mit von 1 bis 12 Kohlenstoffatomen in α-Position aufweisen, die weitere funktionelle Gruppen tragen können. Sofern eines oder mehrere aus Q², Q⁴, Q²' und Q⁴' so gewählt werden, dass sie lineare oder verzweigte Alkylgruppen mit von 1 bis 12 Kohlenstoffatomen entsprechen, die weitere funktionelle Gruppen tragen, dann sind Aminogrupppen und/oder Hydroxygruppen und/oder Halogenatome als solche funktionelle Gruppen bevorzugt.

Vorzugsweise werden die Alkylgruppen im Rahmen der Substituenten Q gemäß der allgemeinen Formel I ausgewählt aus Methyl, Ethyl, n-Propyl, iso-Propyl, n-Butyl, sek-Butyl und tert-Butyl.

Vorzugsweise werden die Amine (a2-s) ausgewählt aus der Gruppe bestehend aus 3,3',5,5'-Tetraalkyl-4,4'-diaminodiphenylmethan, 3,3',5,5'-Tetraalkyl-2,2'-diaminodiphenylmethan und 3,3',5,5'-Tetraalkyl-2,4'-diaminodiphenylmethan, wobei die Alkylgruppen in 3,3',5 und 5'-Position gleich oder unterschiedlich sein können und unabhängig voneinander ausgewählt werden aus linearen oder verzweigten Alkylgruppen mit von 1 bis 12 Kohlenstoffatomen, die weitere funktionelle Gruppen tragen können. Vorzugsweise sind vorgenannte Alkylgruppen Methyl, Ethyl, n-Propyl, i-Propyl, n-Butyl, sek-Butyl oder t-Butyl (jeweils unsubstituiert).

In einer Ausführungsform können eines, mehrere oder alle Wasserstoffatome einer oder mehrerer Alkylgruppen der Substituenten Q durch Halogenatome, insbesondere Chlor, ersetzt sein. Alternativ können eines, mehrere oder alle Wasserstoffatome einer oder mehrerer Alkylgruppen der Substituenten Q durch NH₂ oder OH ersetzt sein. Es ist jedoch bevorzugt, wenn die Alkylgruppen im Rahmen der allgemeinen Formel I aus Kohlenstoff und Wasserstoff aufgebaut sind.

In einer besonders bevorzugten Ausführungsform umfasst Komponente (a2) 3,3',5,5'-Tetraalkyl-4,4'-diaminodiphenylmethan, wobei die Alkylgruppen gleich oder unterschiedlich sein können und unabhängig ausgewählt werden aus linearen oder verzweigten Alkylgruppen mit von 1 bis 12 Kohlenstoffatomen, die optional funktionelle Gruppen tragen können. Vorzugsweise werden vorgenannte Alkylgruppen ausgewählt aus unsubstituierten Alkylgruppen, insbesondere Methyl, Ethyl, n-Propyl, iso-Propyl, n-Butyl, sek-Butyl und tert-Butyl, besonders bevorzugt aus Methyl und Ethyl. Ganz besonders bevorzugt sind 3,3'-5,5'-Tetraethyl-4,4'-diaminodiphenylmethan und/oder 3,3'-5,5'-Tetramethyl-4,4'-diaminodiphenylmethan.

Die vorgenannten mehrfunktionellen Amine des Typs (a2-s) sind dem Fachmann an sich bekannt oder können nach bekannten Methoden hergestellt werden. Eine der bekannten Methoden ist die Umsetzung von Anilin beziehungsweise von Derivaten des Anilins mit Formaldehyd unter saurer Katalyse, insbesondere die Umsetzung von 2,4-oder 2,6-Dialkylanilin.

Optional kann die Komponente (a2) auch weitere mehrfunktionelle aromatische Amine (a2-u) umfassen, welche sich von den Aminen der Struktur (a2-s) unterscheiden. Die aromatischen Amine (a2-u) weisen vorzugsweise ausschließlich aromatisch gebundene Aminogruppen auf, können jedoch auch sowohl (cyclo)aliphatisch als auch aromatisch gebundene reaktive Aminogruppen aufweisen.

Geeignete mehrfunktionelle aromatische Amine (a2-u) sind insbesondere Isomere und Derivate von Diaminodiphenylmethan. Im Rahmen von Komponente (a2) bevorzugte Isomere und Derivate von Diaminodiphenylmethan sind insbesondere 4,4'-Diaminodiphenylmethan, 2,4'-Diaminodiphenylmethan, 2,2'-Diaminodiphenylmethan und oligomeres Diaminodiphenylmethan.

Geeignete mehrfunktionelle aromatische Amine (a2-u) sind außerdem insbesondere Isomere und Derivate von Toluoldiamin. Im Rahmen von Komponente (a2) bevorzugte Isomere und Derivate von Toluoldiamin sind insbesondere Toluol-2,4-diamin und/oder Toluol-2,6-diamin und Diethyltoluoldiamine, insbesondere 3,5-Diethyltoluol-2,4-diamin und/oder 3,5-Diethyltoluol-2,6-diamin.

In einer ersten, besonders bevorzugten Ausführungsform besteht Komponente (a2) ausschließlich aus mehrfunktionellen aromatischen Aminen des Typs (a2-s). In einer zweiten bevorzugten Ausführungsform besteht Komponente (a2) aus mehrfunktionellen aromatischen Aminen der Typen (a2-s) und (a2-u). Im Rahmen der letztgenannten, zweiten bevorzugten Ausführungsform enthält die Komponente (a2) vorzugsweise mindestens ein mehrfunktionelles aromatisches Amin (a2-u), wovon mindestens eines ausgewählt ist aus Isomeren und Derivaten von Diaminodiphenylmethan (MDA).

Besonders bevorzugt umfasst Komponente (a2) im Rahmen der zweiten bevorzugten Ausführungsform entsprechend mindestens ein mehrfunktionelles aromatisches Amin (a2-u) ausgewählt aus 4,4'-Diaminodiphenylmethan, 2,4'-Diaminodiphenylmethan, 2,2'-Diaminodiphenylmethan und oligomerem Diaminodiphenylmethan.

Oligomeres Diaminodiphenylmethan enthält ein oder mehrere mehrkernige Methylenverbrückte Kondensationsprodukte von Anilin und Formaldehyd. Oligomeres MDA enthält mindestens ein, im Allgemeinen jedoch mehrere Oligomere des MDA mit einer Funktionalität von mehr als 2, insbesondere 3 oder 4 oder 5. Oligomeres MDA ist bekannt oder kann nach an sich bekannten Methoden hergestellt werden. Üblicherweise wird oligomeres MDA in Form von Mischungen mit monomerem MDA eingesetzt.

Die (mittlere) Funktionalität eines mehrfunktionellen Amins (a2-u), welches oligomeres MDA enthält, kann im Bereich von ungefähr 2,3 bis ungefähr 5 variieren, insbesondere von 2,3 bis 3,5 und insbesondere von 2,3 bis 3. Eine solche Mischung von MDAbasierten mehrfunktionellen Aminen mit unterschiedlichen Funktionalitäten ist insbesondere das Roh-MDA, das insbesondere bei der Kondensation von Anilin mit Formaldehyd, üblicherweise katalysiert durch Salzsäure, als Zwischenprodukt der Herstellung von Roh-MDI entsteht.

Im Rahmen der genannten bevorzugten zweiten Ausführungsform ist besonders bevorzugt, wenn die Komponente (a2) oligomeres Diaminodiphenylmethan als Verbindung (a2-u) enthält und insgesamt eine Funktionalität von mindestens 2,1 aufweist.

Der Anteil der Amine des Typs (a2-s) gemäß der allgemeinen Formel I am Gesamtgewicht aller mehrfunktionellen Amine der Komponente (a2), die somit insgesamt 100 Gew.-% ergeben, beträgt vorzugsweise von 10 bis 100 Gew.-%, insbesondere von 30 bis 100 Gew.-%, ganz besonders bevorzugt von 50 bis 100 Gew.-%, insbesondere von 80 bis 100 Gew.-%.

Der Anteil der mehrfunktionellen aromatischen Amine (a2-u), die sich von den Aminen des Typs (a2-s) unterscheiden, am Gesamtgewicht aller mehrfunktionellen Amine der Komponente (a2) beträgt vorzugsweise von 0 bis 90 Gew.-%, insbesondere von 0 bis 70 Gew.-%, besonders bevorzugt von 0 bis 50 Gew.-%, insbesondere von 0 bis 20 Gew.-%.

Komponente (a3) ist Wasser. Die bevorzugt eingesetzte Menge Wasser beträgt von 0,1 bis 30 Gew.-%, insbesondere von 0,2 bis 25 Gew.-%, besonders bevorzugt von 0,5 bis 20 Gew.-%, jeweils bezogen auf das Gesamtgewicht der Komponenten (a1), (a2) und (a3), welches 100 Gew.-% ergibt.

Die bevorzugte Menge Wasser ist innerhalb der dargelegten Bereiche davon abhängig, ob ein Katalysator (a4) verwendet wird oder nicht.

In einer ersten Ausführungsform erfolgt die Umsetzung der Komponenten (a1), (a2) und (a3) ohne die Anwesenheit eines Katalysators (a4). In dieser ersten Ausführungsform hat es sich als vorteilhaft herausgestellt, von 5 bis 30 Gew.-%, insbesondere von 6 bis 25 Gew.-%, besonders bevorzugt von 8 bis 20 Gew.-% Wasser als Komponente (a3) jeweils bezogen auf das Gesamtgewicht der Komponenten (a1), (a2) und (a3), welches 100 Gew.-% ergibt, einzusetzen.

Im Rahmen dieser ersten Ausführungsform werden die vorgenannten Komponenten (a1), (a2) und (a3) vorzugsweise in folgendem Verhältnis eingesetzt, jeweils bezogen auf das Gesamtgewicht der Komponenten (a1), (a2) und (a3), welches 100 Gew.-% ergibt: von 40 bis 94,9 Gew.-%, insbesondere von 55 bis 93,5 Gew.-%, besonders bevorzugt von 68 bis 90 Gew.-% der Komponente (a1), von 0,1 bis 30 Gew.-%, insbesondere von 0,5 bis 20 Gew.-%, besonders bevorzugt von 2 bis 12 Gew.-% der Komponente (a2) und von 5 bis 30 Gew.-%, insbesondere von 6 bis 25, besonders bevorzugt von 8 bis 20 Gew.-% der Komponente (a3).

Aus dem Wassergehalt und dem Gehalt reaktiver Isocyanatgruppen der Komponente (a1) ergibt sich ein rechnerischer Gehalt an Aminogruppen, indem man von einer vollständigen Umsetzung des Wassers mit den Isocyanatgruppen der Komponente (a1) unter Bildung einer entsprechenden Menge Aminogruppen ausgeht und diesen Gehalt zum Gehalt resultierend aus Komponente (a2) addiert (insgesamt n^{Amin}), Das hieraus resultierende Einsatzverhältnis der rechnerisch verbleibenden NCO-Gruppen n^{NCO} im Verhältnis zu den rechnerisch gebildeten sowie eingesetzten Aminogruppen wird nachfolgend als rechnerisches Einsatz-Verhältnis n^{NCO}/n^{Amin} bezeichnet und ist ein Äquivalenzverhältnis, d. h. ein molares Verhältnis der jeweiligen funktionellen Gruppen.

Im Rahmen der vorstehend genannten ersten Ausführungsform kann das rechnerische Einsatz-Verhältnis (Äquivalenzverhältnis) n^{NCO}/n^{Amin} über einen weiten Bereich variieren und insbesondere von 0,6 bis 5 betragen. n^{NCO}/n^{Amin} beträgt vorzugsweise von 1 bis 1,6, insbesondere von 1,1 bis 1,4.

Wasser reagiert mit den Isocyanatgruppen zu Aminogruppen unter Freisetzung von CO₂. Somit werden mehrfunktionelle Amine teilweise als Zwischenprodukt (in situ) erzeugt. Sie werden im weiteren Verlauf der Umsetzung mit Isocyanatgruppen zu Harnstoffverknüpfungen umgesetzt. Die Erzeugung von Aminen als Zwischenprodukt führt zu porösen Materialien mit besonders hoher mechanischer Stabilität und geringer Wärmeleitfähigkeit. Das gebildete CO₂ darf die Gelierung jedoch nicht so stark stören, dass die Struktur des resultierenden porösen Materials in unerwünschter Weise beeinflusst wird. Hieraus ergibt sich die oben ausgeführte bevorzugte Obergrenze für den Wassergehalt bezogen auf das Gesamtgewicht der Komponenten (a1) bis (a3), der vorzugsweise höchstens 30 Gew.-%, besonders bevorzugt höchstens 25 Gew.-%, insbesondere höchstens 20 Gew.-% beträgt. Ein Wassergehalt in diesem Bereich führt darüber hinaus zu dem Vorteil, dass etwaiges Restwasser nach erfolgter Gelierung nicht aufwendig durch Trocknung entfernt werden muss.

In einer zweiten, bevorzugten Ausführungsform erfolgt die Umsetzung der Komponenten (a1), (a2) und (a3) in Anwesenheit eines Katalysators (a4). In dieser zweiten Ausführungsform hat es sich als vorteilhaft herausgestellt, von 0,1 bis 15 Gew.-%, insbesondere von 0,2 bis 15 Gew.-%, besonders bevorzugt von 0,5 bis 12 Gew.-% Wasser als Komponente (a3), jeweils bezogen auf das Gesamtgewicht der Komponenten (a1), (a2) und (a3), welches 100 Gew.-% ergibt, einzusetzen. In den vorgenannten Bereichen ergeben sich besonders günstige mechanische Eigenschaften der resultierenden porösen Materialien, was durch eine besonders günstige Netzwerkstruktur begründet ist. Eine höhere Menge an Wasser wirkt sich negativ auf die Netzwerkstruktur aus und ist in Bezug auf die Endeigenschaften des porösen Materials von Nachteil.

Im Rahmen der bevorzugten zweiten Ausführungsform werden die vorgenannten Komponenten (a1), (a2) und (a3) vorzugsweise in folgendem Verhältnis eingesetzt, jeweils bezogen auf das Gesamtgewicht der Komponenten (a1), (a2) und (a3), welches 100 Gew.-% ergibt: von 55 bis 99,8 Gew.-%, insbesondere von 65 bis 99, 3 Gew.-%, besonders bevorzugt von 76 bis 97,5 Gew.-% der Komponente (a1), von 0,1 bis 30 Gew.-%, insbesondere von 0,5 bis 20 Gew.-%, besonders bevorzugt von 2 bis 12 Gew.-% der Komponente (a2) und von 0,1 bis 15 Gew.-%, insbesondere von 0,2 bis 15, besonders bevorzugt von 0,5 bis 12 Gew.-% der Komponente (a3).

Gemäß der vorstehend genannten zweiten Ausführungsform beträgt das rechnerische Einsatz-Verhältnis (Äquivalenzverhältnis) n^{NCO}/n^{Amin} bevorzugt von 1,01 bis 5. Besonders bevorzugt beträgt das genannte Äquivalenzverhältnis von 1,1 bis 3, insbesondere von 1,1 bis 2. Ein Überschuss n^{NCO} gegenüber n^{Amin} führt in dieser Ausführungsform zu einer geringeren Schrumpfung des porösen Materials, insbesondere Xerogel, bei der Entfernung des Lösungsmittels sowie durch synergistische Zusammenwirkung mit dem Katalysator (a4) zu einer verbesserten Netzwerkstruktur und zu verbesserten Endeigenschaften des resultierenden porösen Materials.

Die Komponenten (a1) und (a2) werden nachfolgend gemeinsam als organische Gelvorstufe (A) bezeichnet. Es ist für den Fachmann offensichtlich, dass die teilweise Umsetzung der Komponente (a1) mit der Komponente (a3) zu der eigentlichen Gelvorstufe (A) führt, welche anschließend zu einem Gel umgesetzt wird.

### Katalysator (a4)

Das erfindungsgemäße Verfahren wird vorzugsweise in Gegenwart mindestens eines Katalysators als Komponente (a4) durchgeführt.

Als Katalysatoren kommen im Prinzip alle dem Fachmann bekannten Katalysatoren in Betracht, welche die Trimerisierung von Isocyanaten (sogenannte Trimerisierungskatalysatoren) und/oder die Umsetzung von Isocyanaten mit Aminogruppen (sogenannte Gelkatalysatoren) und/oder die Umsetzung von Isocyanaten mit Wasser (sogenannte Treibkatalysatoren) beschleunigen.

Die entsprechenden Katalysatoren sind an sich bekannt und weisen unterschiedliche Ausprägungen hinsichtlich der oben genannten drei Reaktionen auf. Je nach Ausprägung können sie somit ein oder mehrerer der vorgenannten Typen zugeordnet werden. Dem Fachmann ist darüber hinaus bekannt, dass auch andere Reaktionen als die oben genannten auftreten können.

Entsprechende Katalysatoren lassen sich unter anderem anhand ihres Gel- zu Treib-Verhältnisses charakterisieren, wie z.B. bekannt aus Polyurethane, 3. Auflage, G. Oertel, Hanser Verlag, München, 1993.

Bevorzugte Katalysatoren (a4) weisen ein ausgewogenes Gel- zu Treibverhältnis auf, so dass die Reaktion der Komponente (a1) mit Wasser nicht zu stark beschleunigt wird und zu einer negativen Beeinflussung der Netzwerkstruktur führt und gleichzeitig eine kurze Gelierungszeit resultiert, so dass die Entformungszeit vorteilhaft gering ist. Bevorzugte Katalysatoren weisen gleichzeitig eine signifikante Aktivität hinsichtlich der Trimerisierung auf. Hierdurch wird die Homogenität der Netzwerkstruktur günstig beeinflusst, woraus besonders günstige mechanische Eigenschaften resultieren.

Die Katalysatoren können ein Monomerbaustein (einbaubarer Katalysator) oder nichteinbaubar sein.

Die Komponente (a4) wird zweckmäßigerweise in der geringsten wirksamen Menge eingesetzt. Vorzugsweise Anwendung finden Mengen von 0,01 bis 5 Gew.-teile, insbesondere von 0,1 bis 3 Gew.- teile, besonders bevorzugt von 0,2 bis 2,5 Gew.- teile der Komponente (a4) bezogen auf insgesamt 100 Gew.-teile der Komponenten (a1), (a2) und (a3).

Im Rahmen von Komponente (a4) bevorzugte Katalysatoren werden ausgewählt aus der Gruppe bestehend aus primären, sekundären und tertiären Aminen, Triazinderivaten, Organometallverbindungen, Metallchelaten, quaternäre Ammoniumsalzen, Ammoniumhydroxiden sowie Alkali- und Erdalkali-Hydroxiden, -alkoxiden und -carboxylaten.

Geeignete Katalysatoren sind insbesondere starke Basen, beispielsweise quaternäre Ammoniumhydroxide, wie z. B. Tetraalkylammoniumhydroxide mit 1 bis 4 C-Atomen im Alkylrest und Benzyltrimethylammoniumhydroxid, Alkalimetallhydroxide, wie z. B. Kalium- oder Natriumhydroxid und Alkalimetallalkoxide, wie z. B. Natriummethylat, Kalium- und Natriumethylat und Kaliumisopropylat.

Geeignete Katalysatoren sind außerdem insbesondere Alkalimetallsalze von Carbonsäuren, wie z. B. Kaliumformiat, Natrium-, Kaliumacetat, Kalium-2-ethylhexanoat, Kaliumadipat und Natriumbenzoat, Alkalisalze von langkettigen Fettsäuren mit 8 bis 20, insbesondere 10 bis 20 C-Atomen und gegebenenfalls seitenständigen OH-Gruppen.

Geeignete Katalysatoren sind außerdem insbesondere N-Hydroxyalkyl-quartemärammoniumcarboxylate, wie z.B. Trimethylhydroxypropylammoniumformiat.

Organometallverbindungen sind dem Fachmann insbesondere als Gelkatalysatoren an sich bekannt und sind als Katalysatoren (a4) ebenfalls geeignet. Organozinnverbindungen wie z.B. Zinn-2-ethylhexanoate und Dibutylzinndilaurate sind im Rahmen von Komponente (a4) bevorzugt.

Tertiäre Amine sind dem Fachmann als Gelkatalysatoren und als Trimerisierungskatalysatoren an sich bekannt. Tertiäre Amine sind als Katalysatoren (a4) besonders bevorzugt. Bevorzugte tertiäre Amine sind insbesondere N,N-Dimethylbenzylamin, N,N'-Dimethylpiperazin, N,N-Dimethylcyclohexylamin, N,N',N"-Tris-(dialkylaminoalkyl)-s-hexahydrotriazine, wie z. B. N,N',N"-Tris(dimethylaminopropyl)-s-hexahydrotriazin, Tris-(dimethylaminomethyl)phenol, Bis(2-dimethylaminoethyl)ether, N,N,N,N,N-Pentamethyldiethylentriamin, Methylimidazol, Dimethylbenzylamin, 1,6-Diazabicyclo-5,4,0-undecen-7, Triethylamin, Triethylendiamin (IUPAC: 1,4-Diazabicyclo[2,2,2]octan), Dimethylaminoethanolamin, Dimethylaminopropylamin, N,N-Dimethylaminoethoxyethanol, N,N,N-Trimethylaminoethylethanolamin, Triethanolamin, Diethanolamin, Triisopropanolamin und Diisopropanolamin.

Im Rahmen von Komponente (a4) besonders bevorzugte Katalysatoren werden ausgewählt aus der Gruppe bestehend aus N,N-Dimethylcyclohexylamin, Bis(2-dimethylaminoethyl)ether, N,N,N,N,N-Pentamethyldiethylentriamin, Methylimidazol, Dimethylbenzylamin, 1,6-Diazabicyclo-5,4,0-undecen-7, Tris-dimethylaminopropylhexahydrotriazin, Triethylamin, Tris-(dimethylaminomethyl)phenol, Triethylendiamin (Diazabicyclo[2,2,2]octan), Dimethylaminoethanolamin, Dimethylaminopropylamin, N,N-Dimethylaminoethoxyethanol, N,N,N-Trimethylaminoethylethanolamin, Triethanolamin, Diethanolamin, Triisopropanolamin, Diisopropanolamin, Metall-Acetylacetonate, Ammonium-Ethylhexanoate und Metallionen-Ethylhexanoate.

Die Verwendung der im Rahmen der vorliegenden Erfindung bevorzugten Katalysatoren (a4) führt zu porösen Materialien mit verbesserten mechanischen Eigenschaften, insbesonders zu verbesserter Druckfestigkeit. Darüber hinaus wird durch Verwendung der Katalysatoren (a4) die Gelierungszeit verringert, d. h. die Gelierungsreaktion beschleunigt, ohne andere Eigenschaften negativ zu beeinflussen.

### Lösungsmittel (C)

Gemäß der vorliegenden Erfindung findet die Umsetzung in Gegenwart eines Lösungsmittels (C) statt.

Der Begriff Lösungsmittel (C) umfasst im Rahmen der vorliegenden Erfindung flüssige Verdünnungsmittel, das heißt sowohl Lösungsmittel im engeren Sinne als auch Dispersionsmittel. Die Mischung kann insbesondere eine echte Lösung, eine kolloidale Lösung oder eine Dispersion, z.B. eine Emulsion oder Suspension, sein. Bevorzugt ist die Mischung eine echte Lösung. Das Lösungsmittel (C) ist eine unter den Bedingungen des Schrittes (a) flüssige Verbindung, vorzugsweise ein organisches Lösungsmittel.

Als Lösungsmittel (C) kommen prinzipiell eine organische Verbindung oder ein Gemisch aus mehreren Verbindungen in Betracht, wobei das Lösungsmittel (C) bei den Temperatur- und Druckbedingungen, unter denen die Mischung in Schritt (a) bereitgestellt wird (kurz: Lösungsbedingungen), flüssig ist. Die Zusammensetzung des Lösungsmittels (C) wird so gewählt, dass es in der Lage ist, die organische Gelvorstufe zu lösen oder zu dispergieren, bevorzugt zu lösen. Bevorzugte Lösungsmittel (C) sind solche, die ein Lösungsmittel für die organische Gelvorstufe (A) sind, d. h. solche, die die organische Gelvorstufe (A) unter Reaktionsbedingungen vollständig lösen.

Das Reaktionsprodukt der Umsetzung in Gegenwart des Lösungsmittels (C) ist zunächst ein Gel, d. h. ein viskoelastisches chemisches Netzwerk, das durch das Lösungsmittel (C) gequollen ist. Ein Lösungsmittel (C), welches ein gutes Quellmittel für das in Schritt (b) gebildete Netzwerk darstellt, führt in der Regel zu einem Netzwerk mit feinen Poren und kleinem mittleren Porendurchmesser, wohingegen ein Lösungsmittel (C), welches ein schlechtes Quellmittel für das aus Schritt (b) resultierende Gel darstellt, in der Regel zu einem grobporigen Netzwerk mit großem mittleren Porendurchmesser führt.

Die Wahl des Lösungsmittels (C) beeinflusst somit die angestrebte Porengrößenverteilung und die angestrebte Porosität. Die Wahl des Lösungsmittels (C) erfolgt im Allgemeinen zudem so, dass ein Ausfällen oder Ausflocken durch Bildung eines präzipitierten Reaktionsproduktes während oder nach Schritt (b) des erfindungsgemäßen Verfahrens weitestgehend nicht auftritt.

Bei Wahl eines geeigneten Lösungsmittels (C) ist der Anteil an präzipitiertem Reaktionsprodukt üblicherweise kleiner als 1 Gew.-%, bezogen auf das Gesamtgewicht der Mischung. Die Menge an gebildetem präzipitiertem Produkt in einem bestimmten Lösungsmittel (C) kann gravimetrisch bestimmt werden, indem die Reaktionsmischung vor dem Gelpunkt über ein geeignetes Filter filtriert wird.

Als Lösungsmittel (C) kommen die aus dem Stand der Technik bekannten Lösungsmittel für Isocyanat-basierte Polymere in Frage. Bevorzugte Lösungsmittel sind dabei solche, die ein Lösungsmittel für die Komponenten (a1), (a2) und (a3) sind, d. h. solche, die die Bestandteile der Komponenten (a1), (a2) und (a3) unter Reaktionsbedingungen weitgehend vollständig lösen. Bevorzugt ist das Lösungsmittel (C) gegenüber Komponente (a1) inert, d. h. nicht reaktiv.

Als Lösungsmittel (C) kommen beispielsweise Ketone, Aldehyde, Alkylalkanoate, Amide wie Formamid und N-Methylpyrollidon, Sulfoxide wie Dimethylsulfoxid, aliphatische und cycloaliphatische halogenierte Kohlenwasserstoffe, halogenierte aromatische Verbindungen und fluorhaltige Ether in Betracht. Ebenso in Betracht kommen Mischungen aus zwei oder mehreren der vorgenannten Verbindungen.

Weiterhin kommen Acetale, insbesondere Diethoxymethan, Dimethoxymethan und 1,3-Dioxolan, als Lösungsmittel (C) in Betracht.

Dialkylether und zyklische Ether sind als Lösungsmittel (C) ebenfalls geeignet. Bevorzugte Dialkylether sind insbesondere solche mit 2 bis 6 Kohlenstoffatomen, insbesondere Methyl-Ethylether, Diethylether, Methyl-Propylether, Methyl-Isopropylether, Propyl-Ethylether, Ethyl-Isopropylether, Dipropylether, Propyl-Isopropylether, Diisopropylether, Methyl-Butylether, Methyl-Isobutylether, Methyl-t-Butylether, Ethyl-n-Butylether, Ethyl-Isobutylether und Ethyl-t-Butylether. Bevorzugte zyklische Ether sind insbesondere Tetrahydrofuran, Dioxan und Tetrahydropyran.

Als Lösungsmittel (C) sind außerdem Alkylalkanoate bevorzugt, insbesondere Methylformiat, Methylacetat, Ethylformiat, Butylacetat und Ethylacetat. Bevorzugte halogenierte Lösungsmittel sind in der WO 00/24799, Seite 4, Zeile 12 bis Seite 5, Zeile 4 beschrieben.

Aldehyde und/oder Ketone sind als Lösungsmittel (C) besonders bevorzugt. Als Lösungsmittel (C) geeignete Aldehyde oder Ketone sind insbesondere solche entsprechend der allgemeinen Formel R²-(CO)-R¹, wobei R¹ und R² Wasserstoff oder Alkylgruppen mit 1,2,3 oder 4 Kohlenstoffatomen sind. Geeignete Aldehyde oder Ketone sind insbesondere Acetaldehyd, Propionaldehyd, n-Butyraldehyd, Isobutyraldehyd, 2-Ethylbutyraldehyd, Valeraldehyd, Isopentaldehyd, 2-Methylpentaldehyd, 2-Ethylhexaldehyde, Acrolein, Methacrolein, Crotonaldehyd, Furfural, Acroleindimer, Methacroelindimer, 1,2,3,6-Tetrahydrobenzaldehyd, 6-Methyl-3-cyclohexenaldehyd, Cyanacetaldehyd, Glyoxynsäureethylester, Benzaldehyd, Aceton, Methylisobutylketon, Diethylketon, Methylethylketon, Methylisobutylketon, Methyl-n-butylketon, Ethylisopropylketon, 2-Acetylfuran, 2-Methoxy-4-methylpentan-2-on, Cyclohexanon und Acetophenon. Die vorgenannten Aldehyde und Ketone können auch in Form von Mischungen eingesetzt werden. Ketone und Aldehyde mit Alkylgruppen mit bis zu 3 Kohlenstoffatomen pro Substituent sind als Lösungsmittel (C) bevorzugt. Besonders bevorzugt ist Aceton.
In vielen Fällen ergeben sich besonders geeignete Lösungsmittel (C), indem man zwei oder mehrere miteinander vollständig mischbare Verbindungen, ausgewählt aus den vorgenannten Lösungsmitteln, in Form eines Gemisches einsetzt.

Um in Schritt (b) ein ausreichend stabiles Gel zu erhalten, das bei der Trocknung in Schritt (c) nicht stark schrumpft, darf der Anteil der Komponenten (a1), (a2) und (a3) am Gesamtgewicht der Komponenten (a1) bis (a3) und dem Lösungsmittel (C), welches 100 Gew.-% ergibt, im Allgemeinen nicht weniger als 5 Gew.-% betragen. Bevorzugt beträgt der Anteil der Komponenten (a1), (a2) und (a3) am Gesamtgewicht der Komponenten (a1) bis (a3) und dem Lösungsmittel (C), welches 100 Gew.-% ergibt, mindestens 6 Gew.-%, besonders bevorzugt mindestens 8 Gew.-%, insbesondere mindestens 10 Gew.-%.

Andererseits darf die Konzentration der Komponenten (a1) bis (a3) in der bereitgestellten Mischung nicht zu hoch gewählt werden, da ansonsten kein poröses Material mit günstigen Eigenschaften erhalten wird. Im Allgemeinen beträgt der Anteil der Komponenten (a1), (a2) und (a3) am Gesamtgewicht der Komponenten (a1) bis (a3) und dem Lösungsmittel (C), welches 100 Gew.-% ergibt, höchstens 40 Gew.-%. Bevorzugt beträgt der Anteil der Komponenten (a1), (a2) und (a3) am Gesamtgewicht der Komponenten (a1) bis (a3) und dem Lösungsmittel (C), welches 100 Gew.-% ergibt, höchstens 35 Gew.-%, besonders bevorzugt höchstens 25 Gew.-%, insbesondere höchstens 20 Gew.-%.

Vorzugsweise beträgt der Gewichtsanteil der Komponenten (a1), (a2) und (a3) am Gesamtgewicht der Komponenten (a1), (a2) und (a3) und des Lösungsmittels (L), welches 100 Gew.-% ergibt, insgesamt von 8 bis 25 Gew.-%, insbesondere von 10 bis 20 Gew.-%, besonders bevorzugt von 12 bis 18 Gew.-%. Die Einhaltung der Menge der Einsatzstoffe im genannten Bereich führt zu porösen Materialien mit besonders günstiger Porenstruktur, geringer Wärmeleitfähigkeit und geringer Schrumpfung bei der Trocknung.

Vor der Umsetzung ist es erforderlich, die eingesetzten Komponenten zu mischen, insbesondere homogen zu vermischen. Die Geschwindigkeit des Mischens sollte groß relativ zur Geschwindigkeit der Umsetzung sein, um Mischfehler zu vermeiden. Entsprechende Mischverfahren sind dem Fachmann an sich bekannt.

### Bevorzugtes Verfahren zur Herstellung der porösen Materialien

Im Rahmen einer bevorzugten Ausführungsform umfasst das erfindungsgemäße Verfahren zumindest folgende Schritte:
(a) Bereitstellen der Komponenten (a1), (a2) und (a3) und des Lösungsmittels (C) wie oben erläutert,
(b) Umsetzung der Komponenten (a1), (a2) und (a3) in Gegenwart des Lösungsmittels (C) zu einem Gel, und
(c) Trocknen des im vorigen Schritt erhaltenen Gels.

Bevorzugte Ausführungsformen der Schritte (a) bis (c) werden im Folgenden näher beschreiben.

### Schritt (a)

Erfindungsgemäß erfolgt in Schritt (a) das Bereitstellen der Komponenten (a1), (a2) und (a3) und des Lösungsmittels (C).

Vorzugsweise werden die Komponenten (a1) einerseits und (a2) andererseits getrennt voneinander jeweils in einer geeigneten Teilmenge des Lösungsmittels (C) bereitgestellt. Die getrennte Bereitstellung ermöglicht die optimale Kontrolle beziehungsweise Steuerung der Gelierungsreaktion vor und während des Vermischens.

Besonders bevorzugt wird Komponente (a3) als Mischung mit Komponente (a2), d. h. getrennt von Komponente (a1), bereitgestellt. Dies vermeidet die Reaktion von Wasser mit Komponente (a1) unter Bildung von Netzwerken ohne Anwesenheit der Komponente (a2). Andernfalls führt die Vorabmischung von Wasser mit Komponente (a1) zu weniger günstigen Eigenschaften in Bezug auf die Homogenität der Porenstruktur und die Wärmeleitfähigkeit der resultieren Materialien.

Die in Schritt (a) bereitgestellte Mischung oder Mischungen können außerdem übliche, dem Fachmann bekannte Hilfsmittel als weitere Bestandteile enthalten. Genannt seien beispielsweise oberflächenaktive Substanzen, Flammschutzmittel, Keimbildungsmittel, Oxidationsstabilisatoren, Gleit- und Entformungshilfen, Farbstoffe und Pigmente, Stabilisatoren, z.B. gegen Hydrolyse, Licht, Hitze oder Verfärbung, anorganische und/oder organische Füllstoffe, Verstärkungsmittel und Biozide.

Nähere Angaben über die oben genannten Hilfsmittel- und Zusatzstoffe sind der Fachliteratur zu entnehmen, z.B. aus Plastics Additive Handbook, 5th edition, H. Zweifel, ed. Hanser Publishers, München, 2001.

### Schritt (b)

Erfindungsgemäß erfolgt in Schritt (b) die Umsetzung der Komponenten (a1) und (a2) in Gegenwart des Lösungsmittels (C) zu einem Gel. In Schritt (b) des erfindungsgemäßen Verfahrens wird somit die Komponente (a1) mit Wasser teilweise zu mindestens einem mehrfunktionellen Amin und die mehrfunktionellen Amine mit den mehrfunktionellen Isocyanaten in einer Gelierungsreaktion zu einem Gel umgesetzt.

Um die Umsetzung durchzuführen, muss zunächst eine homogene Mischung der in Schritt (a) bereitgestellten Komponenten erzeugt werden.

Das Bereitstellen der im Rahmen von Schritt (a) bereitgestellten Komponenten kann auf übliche Weise erfolgen. Bevorzugt wird dazu ein Rührer oder eine andere Mischvorrichtung eingesetzt, um eine gute und schnelle Durchmischung zu erzielen. Die zur Erzeugung der homogenen Mischung benötigte Zeitdauer sollte klein im Verhältnis zur der Zeitdauer sein, in der die Gelierungsreaktion zu der zumindest teilweisen Ausbildung eines Gels führt, um Mischfehler zu vermeiden. Die sonstigen Mischbedingungen sind in der Regel nicht kritisch, beispielsweise kann man bei 0 bis 100°C und 0,1 bis 10 bar (absolut), insbesondere z.B. bei Raumtemperatur und Atmosphärendruck, mischen. Nach erfolgter Erzeugung einer homogenen Mischung wird die Mischapparatur vorzugsweise abgeschaltet.

Bei der Gelierungsreaktion handelt es sich um eine Polyadditionsreaktion, insbesondere um eine Polyaddition von Isocyanatgruppen und Aminogruppen.

Unter einem Gel soll ein vernetztes System auf Basis eines Polymers verstanden werden, das in Kontakt mit einer Flüssigkeit (sog. Solvogel oder Lyogel, bzw. mit Wasser als Flüssigkeit: Aquagel oder Hydrogel) vorliegt. Dabei bildet die Polymerphase ein kontinuierliches räumliches Netzwerk.

Im Rahmen von Schritt (b) des erfindungsgemäßen Verfahrens entsteht das Gel üblicherweise durch Ruhenlassen, z.B. durch einfaches Stehenlassen des Behälters, Reaktionsgefäßes oder Reaktors, in dem sich die Mischung befindet (im folgenden Geliervorrichtung genannt). Bevorzugt wird während des Gelierens (Gelbildung) die Mischung nicht mehr gerührt oder durchmischt, weil dies die Ausbildung des Gels behindern könnte. Es hat sich als vorteilhaft erwiesen, die Mischung während des Gelierens abzudecken bzw. die Geliervorrichtung zu verschließen.

Die Gelierung ist dem Fachmann an sich bekannt und wird beispielsweise in der WO-2009/027310 auf Seite 21, Zeile 19 bis Seite 23, Zeile 13 beschrieben, deren Inhalt hiermit in vollem Umfang einbezogen wird.

### Schritt (c)

Erfindungsgemäß wird in Schritt (c) das im vorigen Schritt erhaltene Gel getrocknet.

Grundsätzlich kommt eine Trocknung unter überkritischen Bedingungen in Betracht, vorzugsweise nach Austausch des Lösungsmittels durch CO₂ oder anderen für Zwecke der überkritischen Trocknung geeigneter Lösungsmittel. Eine derartige Trocknung ist dem Fachmann an sich bekannt. Überkritische Bedingungen kennzeichnen eine Temperatur und einen Druck, bei der die zu entfernende fluide Phase im überkritischen Zustand vorliegt. Hierdurch lässt sich die Schrumpfung des Gelkörpers beim Entfernen des Lösungsmittels reduzieren.

Es ist allerdings angesichts der einfachen Verfahrensführung bevorzugt, die erhaltenen Gele durch Überführung der im Gel enthaltenen Flüssigkeit in den gasförmigen Zustand bei einer Temperatur und einem Druck unterhalb der kritischen Temperatur und des kritischen Drucks der im Gel enthaltenen Flüssigkeit zu trocknen.

Vorzugsweise erfolgt das Trocknen des erhaltenen Gels durch Überführung des Lösungsmittels (C) in den gasförmigen Zustand bei einer Temperatur und einem Druck unterhalb der kritischen Temperatur und des kritischen Drucks des Lösungsmittels (C). Demzufolge erfolgt vorzugsweise das Trocknen durch Entfernung des Lösungsmittels (C), das bei der Umsetzung zugegen war, ohne vorherigen Austausch gegen ein weiteres Lösungsmittel.

Entsprechende Methoden sind dem Fachmann ebenfalls bekannt und werden in der WO-2009/027310 auf Seite 26, Zeile 22 bis Seite 28, Zeile 36 beschrieben, deren Inhalt hiermit in vollem Umfang einbezogen wird.

### Eigenschaften der porösen Materialien und Verwendung

Ein weiterer Gegenstand der vorliegenden Erfindung sind die gemäß dem erfindungsgemäßen Verfahren erhältlichen porösen Materialien.

Xerogele sind als poröse Materialien im Rahmen der vorliegenden Erfindung bevorzugt, d. h. vorzugsweise ist das erfindungsgemäß erhältliche poröse Material ein Xerogel.

Unter einem Xerogel wird im Rahmen der vorliegenden Erfindung ein poröses Material mit einer Porosität von mindestens 70 Vol.-% und einem volumengemittelten mittleren Porendurchmesser von höchstens 50 Mikrometer verstanden, welches durch ein Sol-Gel-Verfahren hergestellt wurde, wobei die flüssige Phase durch Trocknen unterhalb der kritischen Temperatur und unterhalb des kritischen Drucks der flüssigen Phase ("subkritische Bedingungen") aus dem Gel entfernt wurde.

Der mittlere Porendurchmesser wird durch Rasterelektronenmiksokopie und anschließender bildanalytischer Auswertung anhand einer statistisch signifikanten Anzahl an Poren bestimmt. Entsprechende Verfahren sind dem Fachmann bekannt.

Vorzugsweise beträgt der volumengewichtete mittlere Porendurchmesser des porösen Materials höchstens 5 Mikrometer. Besonders bevorzugt beträgt der volumengewichtete mittlere Porendurchmesser des porösen Materials höchstens 4 Mikrometer, ganz besonderes bevorzugt höchstens 3 Mikrometer und insbesondere höchstens 2,5 Mikrometer.

Zwar ist eine möglichst geringe Porengröße bei hoher Porosität aus Sicht einer geringen thermischen Leitfähigkeit wünschenswert. Herstellungsbedingt und um ein mechanisch ausreichend stabiles poröses Material zu erhalten, ergibt sich jedoch eine praktische untere Grenze des volumengewichteten mittleren Porendurchmessers. Im Allgemeinen beträgt der volumengewichtete mittlere Porendurchmesser mindestens 200 nm, vorzugsweise mindestens 400 nm. In vielen Fällen beträgt der volumengewichtete mittlere Porendurchmesser mindestens 500 nm, insbesondere mindestens 1 Mikrometer.

Bevorzugt weist das erfindungsgemäß erhältliche poröse Material eine Porosität von mindestens 70 Vol.-%, insbesondere von 70 bis 99 Vol.-%, besonders bevorzugt mindestens 80 Vol.-% auf, ganz besonders bevorzugt mindestens 85 Vol.-%, insbesondere von 85 bis 95 Vol.-%. Die Porosität in Vol.-% bedeutet, dass der genannte Anteil des Gesamtvolumens des porösen Materials aus Poren besteht. Zwar ist aus Sicht einer minimalen Wärmeleitfähigkeit meist eine möglichst hohe Porosität erwünscht, doch ist die Porosität durch die mechanischen Eigenschaften und die Verarbeitbarkeit des porösen Materials nach oben begrenzt.

Die Komponenten (a1), teilweise zunächst mit Wasser umgesetzt, und (a2) liegen im erfindungsgemäß erhältlichen porösen Material in umgesetzter (polymerer) Form vor. Aufgrund der erfindungsgemäßen Zusammensetzung liegen die Monomerbausteine (a1) und (a2) im porösen Material überwiegend über Harnstoffverknüpfungen und/oder über Isocyanuratverknüpfungen gebunden vor, wobei die Isocyanuratgruppen durch Trimerisierung von Isocyanatgruppen der Monomerbausteine (a1) entstehen. Sofern das poröse Material weitere Komponenten enthält, sind weitere mögliche Verknüpfungen beispielsweise Urethangruppen, welche durch Reaktion von Isocyanatgruppen mit Alkoholen oder Phenolen entstehen.

Bevorzugt liegen die Komponenten (a1), teilweise zunächst mit Wasser umgesetzt, und (a2) im porösen Material zu mindestens 50 mol-% durch Harnstoffgruppen -NH-CO-NH- und/oder über Isocyanuratverknüpfungen verknüpft vor. Vorzugsweise liegen die Komponenten (a1) und (a2) im porösen Material von 50 bis 100 mol-% durch Harnstoffgruppen und/oder über Isocyanuratverknüpfungen verknüpft vor, insbesondere von 60 bis 100 mol-%, ganz besonders bevorzugt von 70 bis 100 mol-%, insbesondere 80 bis 100 mol-%, beispielsweise von 90 bis 100 mol-%.

Die zu 100 mol-% fehlenden mol-% liegen als weitere Verknüpfungen vor, wobei solche weitere Verknüpfungen dem Fachmann aus dem Gebiet der Isocyanat-Polymere an sich bekannt sind. Beispielhaft genannt seien Ester-, Harnstoff-, Biuret-, Allophanat-, Carbodiimid-, Isocyanurat-, Uretdion- und/oder Urethangruppen.

Die Bestimmung der mol-% der Verknüpfungen der Monomerbausteine im porösen Material erfolgt mittels NMR-Spektroskopie (Kernspinresonanz) im Festkörper oder in gequollenem Zustand. Geeignete Bestimmungsmethoden sind dem Fachmann bekannt.

Die Dichte des erfindungsgemäß erhältlichen porösen Materials beträgt üblicherweise 20 bis 600 g/l, bevorzugt 50 bis 500 g/l und besonders bevorzugt 70 bis 200 g/l.

Das erfindungsgemäße Verfahren ergibt ein zusammenhängendes poröses Material und nicht nur ein Polymerpulver oder -partikel. Dabei wird die räumliche Form des resultierenden porösen Materials durch die Form des Gels bestimmt, die wiederum durch die Form der Geliervorrichtung bestimmt wird. So ergibt beispielsweise ein zylindrischer Gelierbehälter üblicherweise ein annähernd zylinderförmiges Gel, dass dann zu einem porösen Material in Zylinderform getrocknet werden kann.

Die erfindungsgemäßen erhältlichen porösen Materialien weisen eine geringe Wärmeleitfähigkeit, eine hohe Porosität und eine geringe Dichte bei gleichzeitig hoher mechanischer Stabilität auf. Die porösen Materialien weisen zudem eine geringe mittlere Porengröße auf. Die Kombination der vorgenannten Eigenschaften erlaubt den Einsatz als Dämmstoff im Bereich der thermischen Isolation, insbesondere für Anwendungen im Vakuumbereich, wo eine möglichst geringe Dicke von Vakuumplatten bevorzugt ist, beispielsweise in Kühlgeraten oder in Gebäuden. So ist die Verwendung in Vakuumisolationspaneelen, insbesondere als Kernmaterial für Vakuumisolationspaneelen, bevorzugt. Bevorzugt ist außerdem die Verwendung der erfindungsgemäßen porösen Materialien als Dämmstoff.

Darüber hinaus werden durch die geringe thermische Leitfähigkeit der erfindungsgemäß erhältlichen porösen Materialien Anwendungen bei Drücken von 1 bis 100 mbar und insbesondere von 10 mbar bis 100 mbar möglich. Das Eigenschaftsprofil der erfindungsgemäß erhältlichen porösen Materialien eröffnet insbesondere Anwendungen, bei denen eine lange Lebensdauer der Vakuumpanele gewünscht wird und die auch bei einer Druckzunahme von ungefähr 2 mbar pro Jahr noch nach vielen Jahren, beispielsweise bei einem Druck von 100 mbar, eine niedrige Wärmeleitfähigkeit aufweisen. Die erfindungsgemäß erhältlichen porösen Materialien weisen günstige thermische Eigenschaften einerseits und günstige Materialeigenschaften wie einfache Verarbeitbarkeit und hohe mechanische Stabilität, beispielsweise geringe Brüchigkeit, andererseits auf.

### Beispiele

Die thermische Leitfähigkeit λ wurde nach DIN EN 12667 mit einem Plattengerät der Firma Hesto (Lambda Control A50) bestimmt.

Es wurden folgende Verbindungen eingesetzt:

### Komponente a1:

Oligomeres MDI (Lupranat® M200) mit einem NCO-Gehalt von 30,9 g pro 100 g nach ASTM D-5155-96 A, einer Funktionalität im Bereich von drei und einer Viskosität von 2100 mPa.s bei 25°C nach DIN 53018 (nachfolgend "Verbindung M200").

Oligomeres MDI (Lupranat® M50) mit einem NCO-Gehalt von 31,5 g pro 100 g nach ASTM D-5155-96 A, einer Funktionalität im Bereich von 2,8 bis 2,9 und einer Viskosität von 550 mPa.s bei 25°C nach DIN 53018 (nachfolgend "Verbindung M50").

### Komponente a2:

3,3',5,5'-Tetraethyl-4,4'-diaminodiphenylmethan (nachfolgend "MDEA"); 3,3',5,5'-Tetramethyl-4,4'-diaminodiphenylmethan (nachfolgend "MDMA").

### Komponente a2 (für Vergleichsbeispiele):

Ethacure® 100 der Firma Albemarle, eine Mischung aromatischer Diamine, insbesondere enthaltend 3,5-Diethyltoluyl-2,4-diamin und 3,5-Diethyltoluyl-2,6-diamin; Unilink® 4200 der Firma UOP, ein aromatisches Diamin der Struktur 4,4'-Bis(sec-butylamino)diphenylmethan;

3,3',5,5'-Tetramethyl-4,4'-diaminodicyclohexylmethan; 4,4'-Diaminodiphenylmethan.

### Katalysatoren (a4):

Triethanolamin; Triethylendiamin (IUPAC: 1,4-Diazabicyclo[2.2.2]octan); N,N-Dimethylcyclohexylamin.

### Beispiel 1

56 g der Verbindung M50 wurden unter Rühren bei 20°C in 210 g Aceton in einem Becherglas gelöst. 4 g der Verbindung MDEA und 8 g Wasser wurden in 210 g Aceton in einem zweiten Becherglas gelöst. Die beiden Lösungen aus Schritt (a) wurden unter Rühren gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt.

Rasterelektronenmikroskopie mit anschließender bildanalytischer Auswertung ergab eine bimodale Porengrößenverteilung mit Porendurchmessern im Bereich von 15 µm und 800 nm.Die Wärmeleitfähigkeit betrug 2,9 mW/m*K bei einem Druck von 2,2 * 10⁻⁴ mbar.

### Beispiel 2

60 g der Verbindung M200 wurden unter Rühren bei 20°C in 210 g Aceton in einem Becherglas gelöst. 8 g der Verbindung MDEA und 8 g Wasser wurden in 210 g Aceton in einem zweiten Becherglas gelöst. Die beiden Lösungen aus Schritt (a) wurden unter Rühren gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt.

Elektronenmikroskopische Aufnahmen lassen einen mittleren Porendurchmesser von ca. 1µm erkennen.

Die Wärmeleitfähigkeit betrug 5,5 mW/m*K bei einem Druck von 2,3 * 10⁻⁴ mbar.

### Beispiel 3

70 g der Verbindung M50 wurden unter Rühren bei 20°C in 210 g Aceton in einem Becherglas gelöst. 4 g der Verbindung MDEA, 2 g Triethanolamin und 8 g Wasser wurden in 210 g Aceton in einem zweiten Becherglas gelöst. Die beiden Lösungen aus Schritt (a) wurden unter Rühren gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt.

Elektronenmikroskopische Aufnahmen lassen eine bimodale Porengrößenverteilung erkennen mit Poren im Bereich von 15 µm und 800 nm.

Die Wärmeleitfähigkeit betrug 7,1 mW/m*K bei einem Druck von 2,3 * 10⁻⁴ mbar. Die Verwendung des Katalysators führte zu einer verringerten Gelierungszeit und zu einer verbesserten Druckfestigkeit im Vergleich zu einer Durchführung ohne Katalysator.

### Beispiel 4

56 g der Verbindung M50 wurden unter Rühren bei 20°C in 210 g Aceton in einem Becherglas gelöst. 4 g der Verbindung MDEA, 0,5 g Triethylendiamin und 8 g Wasser wurden in 210 g Aceton in einem zweiten Becherglas gelöst. Die beiden Lösungen aus Schritt (a) wurden unter Rühren gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt. Elektronenmikroskopische Aufnahmen lassen einen mittleren Porendurchmesser von ca. 1,5 µm erkennen.

Die Wärmeleitfähigkeit betrug 4,3 mW/m*K bei einem Druck von 2,2 * 10⁻⁴ mbar. Die Verwendung des Katalysators führte zu einer verringerten Gelierungszeit und zu einer verbesserten Druckfestigkeit im Vergleich zu einer Durchführung ohne Katalysator.

### Beispiel 5

70 g der Verbindung M50 wurden unter Rühren bei 20°C in 210 g Aceton in einem Becherglas gelöst. 4 g der Verbindung MDEA, 2 g N,N-Dimethylcyclohexylamin und 8 g Wasser wurden in 210 g Aceton in einem zweiten Becherglas gelöst. Die beiden Lösungen aus Schritt (a) wurden unter Rühren gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt. Elektronenmikroskopische Aufnahmen lassen einen mittleren Porendurchmesser von ca. 800 nm erkennen.

Die Wärmeleitfähigkeit betrug 7,2 mW/m*K bei einem Druck von 2,7 * 10⁻⁴ mbar. Die Verwendung des Katalysators führte zu einer verringerten Gelierungszeit und zu einer verbesserten Druckfestigkeit im Vergleich zu einer Durchführung ohne Katalysator.

### Vergleichsbeispiel 6

3 g der Verbindung M200 wurden unter Rühren bei 20°C in 10,5 g Aceton in einem Becherglas gelöst. 0,1 g der Verbindung Ethacure® 100 und 0,5 g Wasser wurden in 11 g Aceton in einem zweiten Becherglas gelöst. Die beiden Lösungen aus Schritt (a) wurden unter Rühren gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt.

Es konnte kein stabiles Gel hergestellt werden, da sich nur Niederschlag bildete.

### Vergleichsbeispiel 7

3 g der Verbindung M200 wurden unter Rühren bei 20°C in 10,5 g Aceton in einem Becherglas gelöst. 0,1 g der Verbindung Unilink® 4200 und 0,5 g Wasser wurden in 11 g Aceton in einem zweiten Becherglas gelöst. Die beiden Lösungen aus Schritt (a) wurden unter Rühren gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt.

Es konnte kein stabiles Gel hergestellt werden, da sich nur Niederschlag bildete.

### Vergleichsbeispiel 8

3 g der Verbindung M200 wurden unter Rühren bei 20°C in 10,5 g Aceton in einem Becherglas gelöst. 0,1 g der Verbindung 3,3',5,5'-Tetramethyl-4,4'-diaminodicyclohexylmethan und 0,5 g Wasser wurden in 11 g Aceton in einem zweiten Becherglas gelöst. Die beiden Lösungen aus Schritt (a) wurden unter Rühren gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt.

Es konnte kein stabiles Gel hergestellt werden, da sich nur Niederschlag bildete.

### Vergleichsbeispiel 9

3 g der Verbindung M200 wurden unter Rühren bei 20°C in 10,5 g Aceton in einem Becherglas gelöst. 0,1 g der Verbindung 4,4'-Diaminodiphenylmethan und 0,5 g Wasser wurden in 11 g Aceton in einem zweiten Becherglas gelöst. Die beiden Lösungen aus Schritt (a) wurden unter Rühren gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt.

Es konnte kein stabiles Gel hergestellt werden, da sich nur Niederschlag bildete.

## Patentansprüche

1. Verfahren zur Herstellung eines porösen Materials umfassend die Umsetzung der folgenden Komponenten:
(a1) mindestens ein mehrfunktionelles Isocyanat, und
(a2) mindestens ein mehrfunktionelles substituiertes aromatisches Amin (a2-s) gemäß der allgemeinen Formel I 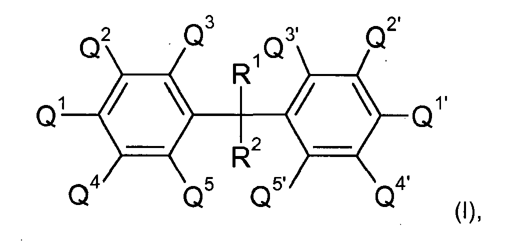 wobei R¹ und R² gleich oder unterschiedlich sein können und unabhängig voneinander ausgewählt werden aus Wasserstoff und linearen oder verzweigten Alkylgruppen mit von 1 bis 6 Kohlenstoffatomen und wobei sämtliche Substituenten Q¹ bis Q⁵ und Q^{1'} bis Q^{5'} gleich oder unterschiedlich sind und unabhängig voneinander ausgewählt werden aus Wasserstoff, einer primären Aminogruppe und einer linearen oder verzweigten Alkylgruppe mit von 1 bis 12 Kohlenstoffatomen, wobei die Alkylgruppe weitere funktionelle Gruppen tragen kann, unter der Voraussetzung, dass
- die Verbindung gemäß der allgemeinen Formel I mindestens zwei primäre Aminogruppen umfasst, wobei zumindest eines aus Q¹, Q³ und Q⁵ eine primäre Aminogruppe ist und zumindest eines aus Q^{1'}, Q^{3'} und Q^{5'} eine primäre Aminogruppe ist und
- Q², Q⁴, Q^{2'} und Q^{4'} so gewählt werden, dass die Verbindung gemäß der allgemeinen Formel I mindestens eine lineare oder verzweigte Alkylgruppe, die weitere funktionelle Gruppen tragen kann, mit von 1 bis 12 Kohlenstoffatomen in α-Position zu mindestens einer an den aromatischen Kern gebundenen primären Aminogruppe aufweist,
und optional mindestens ein weiteres mehrfunktionelles aromatisches Amin (a2-u), welches sich von den Aminen (a2-s) gemäß der allgemeinen Formel I unterscheidet, und
(a3) Wasser,
in Gegenwart eines Lösungsmittels (C) und optional in Gegenwart mindestens eines Katalysators (a4).

2. Verfahren nach Anspruch 1, wobei Q², Q⁴, Q^{2'} und Q^{4'} so gewählt werden, dass das substituierte aromatische Amin (a2-s) mindestens zwei primäre Aminogruppen umfasst, die jeweils eine lineare oder verzweigte Alkylgruppe mit von 1 bis 12 Kohlenstoffatomen in α-Position aufweisen, die weitere funktionelle Gruppen tragen kann.

3. Verfahren nach Anspruch 1 oder 2, wobei die Aminkomponente (a2) mindestens eine Verbindung (a2-s) umfasst, die aus der Gruppe bestehend aus 3,3',5,5'-Tetraalkyl-4,4'-diaminodiphenylmethan, 3,3',5,5'-Tetraalkyl-2,2'-diaminodiphenylmethan und 3,3',5,5'-Tetraalkyl-2,4'-diaminodiphenylmethan ausgewählt wird, wobei die Alkylgruppen in 3,3',5 und 5'-Position gleich oder unterschiedlich sein können und unabhängig voneinander ausgewählt werden aus linearen oder verzweigten Alkylgruppen mit von 1 bis 12 Kohlenstoffatomen, wobei die Alkylgruppen weitere funktionelle Gruppen tragen können.

4. Verfahren nach mindestens einem der Ansprüche 1 bis 3, wobei die Alkylgruppen der mehrfunktionellen aromatischen Amine (a2-s) gemäß der allgemeinen Formel I ausgewählt werden aus Methyl, Ethyl, n-Propyl, iso-Propyl, n-Butyl, sek-Butyl und tert-Butyl.

5. Verfahren nach den Ansprüchen 1 bis 4, wobei die mehrfunktionellen aromatischen Amine (a2-s) gemäß der allgemeinen Formel I 3,3',5,5'-Tetraalkyl-4,4'-diaminodiphenylmethane sind, vorzugsweise 3,3',5,5'-Tetraethyl-4,4'-diaminodiphenylmethan und/oder 3,3',5,5'-Tetramethyl-4,4'-diaminodiphenylmethan.

6. Verfahren nach mindestens einem der Ansprüche 1 bis 5, wobei die eingesetzte Menge der Komponente (a1) von 40 bis 99,8 Gew.-%, insbesondere von 55 bis 99,3 Gew.-% beträgt, bezogen auf das Gesamtgewicht der Komponenten (a1), (a2) und (a3), welches 100 Gew.-% ergibt.

7. Verfahren nach mindestens einem der Ansprüche 1 bis 6, wobei die eingesetzte Menge der Komponente (a2) von 0,1 bis 30 Gew.-%, die der Komponente (a1) von 40 bis 99,8 Gew.-% und die der Komponente (a3) von 0,1 bis 30 Gew.-% beträgt, jeweils bezogen auf das Gesamtgewicht der Komponenten (a1), (a2) und (a3), welches 100 Gew.-% ergibt.

8. Verfahren nach mindestens einem der Ansprüche 1 bis 7, wobei Komponente (a2) ausschließlich aus Verbindungen des Typs (a2-s) gemäß der allgemeinen Formel I besteht.

9. Verfahren nach mindestens einem der Ansprüche 1 bis 8, wobei die Umsetzung in Gegenwart eines Katalysators (a4) durchgeführt wird.

10. Verfahren nach mindestens einem der Ansprüche 1 bis 9, wobei die Umsetzung in Gegenwart mindestens eines tertiären Amins als Katalysator (a4) durchgeführt wird.

11. Verfahren nach mindestens einem der Ansprüche 1 bis 10, umfassend:
(a) Bereitstellen der Komponenten (a1), (a2) und (a3) und des Lösungsmittels (C) wie in den Ansprüchen 1 bis 8 definiert,
(b) Umsetzung der Komponenten (a1), (a2) und (a3) in Gegenwart des Lösungsmittels (C) zu einem Gel, und
(c) Trocknen des im vorigen Schritt erhaltenen Gels.

12. Verfahren nach Anspruch 11, wobei die Komponenten (a1) einerseits und (a2) andererseits getrennt voneinander jeweils in einer Teilmenge des Lösungsmittels (C) bereitgestellt werden.

13. Verfahren nach einem der Ansprüche 11 oder 12, wobei das Trocknen des erhaltenen Gels durch Überführung der im Gel enthaltenen Flüssigkeit in den gasförmigen Zustand bei einer Temperatur und einem Druck unterhalb der kritischen Temperatur und des kritischen Drucks der im Gel enthaltenen Flüssigkeit erfolgt.

14. Verfahren nach einem der Ansprüche 11 oder 12, wobei das Trocknen des erhaltenen Gels unter überkritischen Bedingungen erfolgt.

15. Poröses Material erhältlich gemäß dem Verfahren nach mindestens einem der Ansprüche 1 bis 14.

16. Verwendung von porösen Materialien gemäß Anspruch 15 als Dämmstoff oder für Vakuumisolationspaneele.

## Claims

1. A process for producing a porous material, which comprises reacting the following components:
(a1) at least one polyfunctional isocyanate, and
(a2) at least one polyfunctional substituted aromatic amine (a2-s) having the general formula I 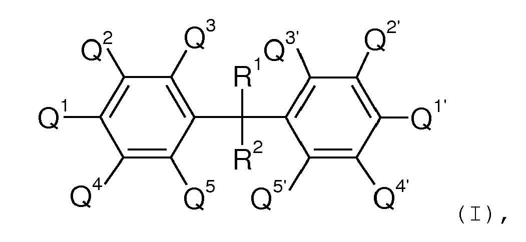 where R¹ and R² can be identical or different and are each selected independently from among hydrogen and linear or branched alkyl groups having from 1 to 6 carbon atoms and all substituents Q¹ to Q⁵ and Q^{1'} to Q^{5'} are identical or different and are each selected independently from among hydrogen, a primary amino group and a linear or branched alkyl group having from 1 to 12 carbon atoms, where the alkyl group can bear further functional groups, with the proviso that
- the compound having the general formula I comprises at least two primary amino groups, where at least one of Q¹, Q³ and Q⁵ is a primary amino group and at least one of Q^{1'}, Q^{3'} and Q^{5'} is a primary amino group, and
- Q², Q⁴, Q^{2'} and Q^{4'} are selected so that the compound having the general formula I has at least one linear or branched alkyl group, which can bear further functional groups, having from 1 to 12 carbon atoms in the α position relative to at least one primary amino group bound to the aromatic ring,
and optionally at least one further polyfunctional aromatic amine (a2-u) which differs from the amines (a2-s) having the general formula I and
(a3) water
in the presence of a solvent (C) and optionally in the presence of at least one catalyst (a4).

2. The process according to claim 1, wherein Q², Q⁴, Q^{2'} and Q^{4'} are selected so that the substituted aromatic amine (a2-s) comprises at least two primary amino groups which each have a linear or branched alkyl group having from 1 to 12 carbon atoms, which can bear further functional groups, in the α position.

3. The process according to claim 1 or 2, wherein the amine component (a2) comprises at least one compound (a2-s) selected from the group consisting of 3,3',5,5'-tetraalkyl-4,4'-diaminodiphenylmethane, 3,3',5,5'-tetraalkyl-2,2'-diaminodiphenylmethane and 3,3',5,5'-tetraalkyl-2,4'-diaminodiphenylmethane, where the alkyl groups in the 3,3',5 and 5' positions can be identical or different and are selected independently from among linear or branched alkyl groups which have from 1 to 12 carbon atoms and can bear further functional groups.

4. The process according to at least one of claims 1 to 3, wherein the alkyl groups of the polyfunctional aromatic amines (a2-s) having the general formula I are selected from among methyl, ethyl, n-propyl, isopropyl, n-butyl, sec-butyl and tert-butyl.

5. The process according to any of claims 1 to 4, wherein the polyfunctional aromatic amines (a2-s) having the general formula 1 are 3,3',5,5'-tetraalkyl-4,4'-diaminodiphenylmethanes, preferably 3,3',5,5'-tetraethyl-4,4'-diaminodiphenylmethane and/or 3,3',5,5'-tetramethyl-4,4'-diaminodiphenylmethane.

6. The process according to at least one of claims 1 to 5, wherein the amount of component (a1) used is from 40 to 99.8% by weight, in particular from 55 to 99.3% by weight, based on the total weight of the components (a1), (a2) and (a3), which is 100% by weight.

7. The process according to at least one of claims 1 to 6, wherein the amount of component (a2) used is from 0.1 to 30% by weight, that of the component (a1) is from 40 to 99.8% by weight and that of the component (a3) is from 0.1 to 30% by weight, in each case based on the total weight of the components (a1), (a2) and (a3), which is 100% by weight.

8. The process according to at least one of claims 1 to 7, wherein component (a2) consists exclusively of compounds of the type (a2-s) having the general formula 1.

9. The process according to at least one of claims 1 to 8, wherein the reaction is carried out in the presence of a catalyst (a4).

10. The process according to at least one of claims 1 to 9, wherein the reaction is carried out in the presence of at least one tertiary amine as catalyst (a4).

11. The process according to at least one of claims 1 to 10, which comprises:
(a) provision of the components (a1), (a2) and (a3) and the solvent (C) defined in claims 1 to 8,
(b) reaction of the components (a1), (a2) and (a3) in the presence of the solvent (C) to form a gel and
(c) drying of the gel obtained in the preceding step.

12. The process according to claim 11, wherein the components (a1) and (a2) are provided separately, in each case in a partial amount of the solvent (C).

13. The process according to either claim 11 or 12, wherein the drying of the gel obtained is carried out by converting the liquid comprised in the gel into the gaseous state at a temperature and a pressure below the critical temperature and the critical pressure of the liquid comprised in the gel.

14. The process according to either claim 11 or 12, wherein the drying of the gel obtained is carried out under supercritical conditions.

15. A porous material which can be obtained by the process according to at least one of claims 1 to 14.

16. The use of porous materials according to claim 15 as insulation material or for vacuum insulation panels.

## Revendications

1. Procédé pour la production d'un matériau poreux, comprenant la mise en réaction des composants suivantes :
(a1) au moins un isocyanate polyfonctionnel, et
(a2) au moins une amine aromatique polyfonctionnelle substituée (a2-s) selon la formule générale I 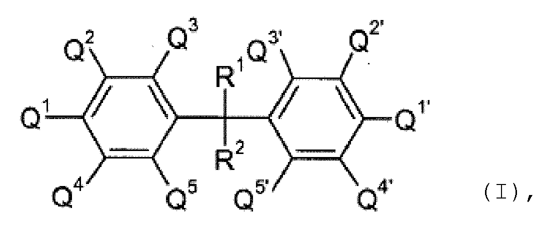 dans laquelle R¹ et R² peuvent être identiques ou différents et sont choisis indépendamment l'un de l'autre parmi un atome d'hydrogène et des groupes alkyle linéaires ou ramifiés ayant de 1 à 6 atomes de carbone et tous les substituants Q¹ à Q⁵ et Q^{1'} à Q^{5'} étant identiques ou différents et choisis indépendamment les uns des autres parmi un atome d'hydrogène, un groupe amino primaire et un groupe alkyle linéaire ou ramifié ayant de 1 à 12 atomes de carbone, le groupe alkyle pouvant porter d'autres groupes fonctionnels, étant entendu que
- le composé selon la formule générale I comprend au moins deux groupes amino primaires, au moins l'un des substituants Q¹, Q³ et Q⁵ étant un groupe amino primaire et au moins l'un des substituants Q^{1'}, Q^{3'} et Q^{5'} étant un groupe amino primaire et
- Q², Q⁴, Q^{2'} et Q^{4'} sont choisis de manière que le composé selon la formule générale I comporte au moins un groupe alkyle linéaire ou ramifié, qui peut porter d'autres groupes fonctionnels, ayant de 1 à 12 atomes de carbone, en position α par rapport à au moins un groupe amino primaire lié au noyau aromatique,
et en option au moins une autre amine aromatique polyfonctionnelle (a2-u) qui est différente des amines (a2-s) selon la formule générale I, et
(a3) de l'eau,
en présence d'un solvant (C) et en option en présence d'au moins un catalyseur (a4).

2. Procédé selon la revendication 1, dans lequel Q², Q⁴, Q^{2'} et Q^{4'} sont choisis de manière que l'amine aromatique substituée (a2-s) comprenne au moins deux groupes amino primaires, qui comportent chacun en position α un groupe alkyle linéaire ou ramifié ayant de 1 à 12 atomes de carbone, qui peut porter d'autres groupes fonctionnels.

3. Procédé selon la revendication 1 ou 2, dans lequel le composant amine (a2) comprend au moins un composé (a2-s) qui est choisi dans le groupe constitué par un 3,3',5,5'-tétraalkyl-4,4'-diaminodiphénylméthane, un 3,3',5,5'-tétraalkyl-2,2'-diaminodiphénylméthane et un 3,3',5,5'-tétraalkyl-2,4'-diaminodiphénylméthane, les groupes alkyle en position 3,3',5 et 5' pouvant être identiques ou différents et étant choisis indépendamment les uns des autres parmi des groupes alkyle linéaires ou ramifiés ayant de 1 à 12 atomes de carbone, les groupes alkyle pouvant porter d'autres groupes fonctionnels.

4. Procédé selon au moins l'une quelconque des revendications 1 à 3, dans lequel les groupes alkyle des amines aromatiques polyfonctionnelles (a2-s) selon la formule générale I sont choisis parmi les groupes méthyle, éthyle, n-propyle, isopropyle, n-butyle, sec-butyle et tert-butyle.

5. Procédé selon les revendications 1 à 4, dans lequel les amines aromatiques polyfonctionnelles (a2-s) selon la formule générale I sont des 3,3',5,5'-tétraalkyl-4,4'-diaminodiphénylméthanes, de préférence le 3,3',5,5'-tétraéthyl-4,4'-diaminodiphénylméthane et/ou le 3,3',5,5'-tétraméthyl-4,4'-diaminodiphénylméthane.

6. Procédé selon au moins l'une quelconque des revendications 1 à 5, dans lequel la quantité utilisée du composant (a1) vaut de 40 à 99,8 % en poids, en particulier de 55 à 99,3 % en poids, par rapport au poids total des composants (a1), (a2) et (a3) qui donne 100 % en poids.

7. Procédé selon au moins l'une quelconque des revendications 1 à 6, dans lequel la quantité utilisée du composant (a2) vaut de 0,1 à 30 % en poids, celle du composant (a1) vaut de 40 à 99,8 % en poids et celle du composant (a3) vaut de 0,1 à 30 % en poids, chaque fois par rapport au poids total des composants (a1), (a2) et (a3) qui donne 100 % en poids.

8. Procédé selon au moins l'une quelconque des revendications 1 à 7, dans lequel le composant (a2) consiste exclusivement en des composés du type (a2-s) selon la formule générale I.

9. Procédé selon au moins l'une quelconque des revendications 1 à 8, dans lequel la réaction est effectuée en présence d'un catalyseur (a4).

10. Procédé selon au moins l'une quelconque des revendications 1 à 9, dans lequel la réaction est effectuée en présence d'au moins une amine tertiaire en tant que catalyseur (a4).

11. Procédé selon au moins l'une quelconque des revendications 1 à 10, comprenant :
(a) la disposition des composants (a1), (a2) et (a3) et du solvant (C) tels que définis dans les revendications 1 à 8,
(b) mise en réaction des composants (a1), (a2) et (a3) en présence du solvant (C), pour l'obtention d'un gel, et
(c) séchage du gel obtenu dans l'étape précédente.

12. Procédé selon la revendication 11, dans lequel on dispose séparément l'un de l'autre les composants (a1) d'une part et (a2) d'autre part, chacun dans une quantité partielle du solvant (C).

13. Procédé selon l'une quelconque des revendications 11 et 12, dans lequel le séchage du gel obtenu s'effectue par conversion à l'état gazeux du liquide contenu dans le gel, à une température et sous une pression inférieures à la température critique et à la pression critique du liquide contenu dans le gel.

14. Procédé selon l'une quelconque des revendications 11 et 12, dans lequel le séchage du gel obtenu s'effectue dans des conditions supercritiques.

15. Matériau poreux pouvant être obtenu conformément au procédé selon au moins l'une quelconque des revendications 1 à 14.

16. Utilisation de matériaux poreux selon la revendication 15, en tant qu'isolant ou pour des panneaux isolants sous vide.
